# EUROPÄISCHE PATENTSCHRIFT

(11) **EP 1 224 416 B1**
(45) Veröffentlichungstag und Bekanntmachung des Hinweises auf die Patenterteilung: **26.11.2003**
(21) Anmeldenummer: 00962542.7
(22) Anmeldetag: 29.09.2000
(51) Int. Cl.: F16L 9/00

(54) **LEITUNGSSYSTEM**
CONDUIT SYSTEM
SYSTEME DE CANALISATION

(30) Priorität: 16.10.1999 DE 19949926
(43) Veröffentlichungstag der Anmeldung: 24.07.2002
(73) Patentinhaber: Kaiser, Christof, 78576 Emmingen (DE)
(72) Erfinder: Kaiser, Christof, 78576 Emmingen (DE)
(74) Vertreter: Weiss, Peter, Dr.
(86) Internationale Anmeldenummer: EP0009538
(87) Internationale Veröffentlichungsnummer: WO01029472

(56) Entgegenhaltungen:
- EP-A- 0 589 380
- EP-A- 0 911 533
- DE-U- 9 102 781
- DE-U- 9 105 646
- DE-U- 9 301 112
- GB-A- 2 029 918

## Beschreibung

Die Erfindung betrifft ein Leitungssystem zum Zuführen, Leiten und Verteilen von Fluiden, insbesondere Luft, mit Profilen die einen Längskanal für das Fluid und in zumindest einer Aussenwand zumindest eine hinterschnittene Ausnehmung zur Aufnahme eines Befestigungselementes für ein Verbindungselement aufweisen, wobei das Befestigungselement das Verbindungselement durchsetzt und ein Klemmstück aufweist, welches in die Ausnehmung einsetzbar und durch Drehen in der Ausnehmung festlegbar ist.

Derartige Leitungssysteme sind in vielfältiger Form und Ausführung bekannt. Sie dienen bspw. zum Leiten von Flüssigkeiten, vor allem aber zum Leiten von Luft und hier insbesondere zum Leiten von Druckluft zu gewünschten Entnahmestellen.

Aus der G 91 02 781.0 U1 ist bspw. eine zum Leiten bzw. Kanalisieren und Verteilen von Fluiden im allgemeinen dienende hohle Schiene bzw. Stange bekannt, die aus extrudiertem Profilmaterial aus Aluminium besteht und eine zentrale Längsbohrung und sich seitlich in Längsrichtung erstreckende rillen - oder kanalförmige, nach aussen offene Nuten besitzt. Diese Schiene bzw. Stange ist modulartig mit anderen, in gleicher Weise ausgebildeten, coaxial mit oder im Winkel zu ihr verlaufenden Stangen oder Schienen mit Hilfe von Verbindungselementen lösbar verbindbar, die aus zwischen den einander zugewandten Enden verlaufenden und mit diesen verbindbaren, auch unter Druck abdichtenden Verbindungsrohrstücken und aus Verbindungsplatten bestehen. Entlang den Schienen oder Stangen sind ferner zur Entnahme des Fluids dienende Auslassbohrungen vorgesehen, die jeweils durch eine abnehmbare Verschluss- und Auslassplatte unter Abdichtung abgedeckt sind, die mindestens eine durchgehende Gewindebohrung aufweist, die zum Anschliessen einer Verteiler- oder Verbraucherleitung für das Fluid dient.

Zum Festlegen der Verbindungsplatte an dem Profil sind Einsatzstücke an jeweils zwei Schrauben vorgesehen, die von der Stirnseite her in die Nuten eingeschoben und durch Anziehen der Schrauben an einer gewünschten Stelle festgelegt werden. Dies hat den Nachteil, dass die Verbindungplatten od. dgl. mühselig eingebracht und positioniert werden müssen oder oftmals von einer weit entfernten Stelle her entlang dem Profil verschoben werden müssen, was bspw. bei Überkopfarbeiten sehr viel Mühe bereitet.

Ein Leitungssystem der o. g. Art ist aus der EP-A-0 911 533 bekannt. Dort ist ein Anschlusselement gezeigt, bei dem eine Anschlusshülse zuerst in eine Bohrung in einem Profil eingesetzt wird. Danach müssen Seitenflügel eines Klemmstückes auf den Nutverlauf ausgerichtet werden. Die Flügel des Klemmstückes werden in die Nut eingeschoben, wobei auf einen Ringkragen gegen den Druck einer Schraubenfeder gedrückt wird. Danach erfolgt ein Drehen des gesamten Anschlusselementes inklusive Klemmstücks um 90°, so dass die beiden Seitenwände der Nut zwischen den Flügeln des Klemmstückes und dem Verbindungselement aufgenommen werden.

Der vorliegenden Erfindung liegt die Aufgabe zugrunde ein System der o. g. Art zu schaffen, mit dem die Herstellung und vor allem die Montage der Verbindungselemente wesentlich erleichtert wird.

Zur Lösung dieser Aufgabe führt, dass das Befestigungselement einen Schraubenbolzen aufweist, der eine Bohrung in dem Verbindungselement durchsetzt und einen Gewindeschaft zum Einsetzen in eine Gewindebohrung in dem Klemmstück aufweist.

Dies bedeutet, dass das Verbindungselement direkt an der Stelle, an der es auch an dem Profil festgelegt werden soll, angesetzt und befestigt wird. Ein mühseliges Einlegen oder ein aufwendiges Verschieben und Positionieren des Verbindungselementes über eine erhebliche Strecke wird vermieden. Ferner kann das Verbindungselement wesentlich gezielter festgelegt werden.

In einem bevorzugten Ausführungsbeispiel handelt es sich bei der Ausnehmung in dem Profil um eine hinterschnittene Nut. Dadurch muss die Ausnehmung bspw. nicht speziell auf eine bestimmte Stelle zentriert werden, auf der das Verbindungselement festgelegt werden soll, sondern es ist möglich, das Verbindungselement an einer beliebigen Stelle des Profils festzulegen und falls es nicht richtig sitzt, wieder zu lösen und zu verschieben.

Bei dem Klemmstück handelt es sich bevorzugt um ein parallelogrammartig geformtes Plättchen. Dieses Plättchen hat den Vorteil, dass es bei einem Drehen in bspw. der hinterschnittenen Nut an den Nutwänden anschlägt und somit nicht weiter gedreht werden kann. Die Breite des Plättchens ist natürlich auf die Breite der Nut begrenzt oder liegt darunter, damit nämlich dieses Plättchen ohne Schwierigkeiten in die Nut eingesetzt werden kann.

Das Befestigungselement besteht somit aus dem eben erwähnten Klemmstück und dem Schraubenbolzen, der die Bohrung in dem Verbindungelement durchsetzt. Der Schraubenbolzen greift in die Gewindebohrung in dem Klemmstück ein und kann in dieser Gewindebohrung drehen. Der Schraubenkopf besitzt eine Ausnehmung, bevorzugt zur Aufnahme eines Imbusschlüssels, jedoch ist auch eine andere Form der Ausnehmung möglich, bspw. zur Aufnahme eines Kreuzschlitzschraubenziehers.

Vor allem ist daran gedacht, den Schraubenkopf gegen das Verbindungselement über eine Schraubenfeder abzustützen. Dies hat den Vorteil, dass das Klemmstück in Ruhelage der Unterseite des Verbindungselementes anliegt. Zum Einführen in die oben erwähnte Nut wird das Klemmstück in die Nut eingesetzt, sodann wird über das Werkzeug Druck auf den Schraubenbolzen ausgeübt, so dass dieser das Klemmstück gegen den Gegendruck der Schraubenfeder in die Nut hineindrückt. Nunmehr wird der Schraubenbolzen mit dem entsprechenden Werkzeug bspw. mit dem Imbusschlüssel gedreht, wobei bei der ersten Drehung der Schraubenbolzen auch das Klemmstück mit sich nimmt, bis dieses mit seinem Parallelogrammflächen an den Innenwandungen der Nut anschlägt. Damit ist ein weiteres Drehen des Klemmstückes unterbunden, der Schraubenbolzen dreht aber weiter mit Hilfe des Werkzeuges in der Gewindebohrung in dem Klemmstück und zieht das Klemmstück an. Dieses drückt nun von innen gegen die hinterschnittenen Flanken der Nut, wodurch eine Festlegung des Verbindungselementes an dem Profil erfolgt.

Damit das Klemmstück bereits für die Aufnahme in der Nut vorzentriert ist, soll es ausserhalb der Gebrauchslage zumindest teilweise in einer Rinne aufgenommen sein oder an einer Kante an der Unterseite des Verbindungselementes anschlagen. Vor allem wenn zwei Klemmstücke in Linie angeordnet sind, erfolgt durch diese Rinne oder durch diese Anschlagkante eine Vorzentrierung, so dass nicht durch das Werkzeug eine Korrektur der Lage des Klemmstückes vor dem Einsetzen in die Nut durchgeführt werden muss.

In einem Ausführungsbeispiel der Erfindung handelt es sich bei dem Verbindungselement um einen etwa rechteckigen Grundkörper, der in zwei sich gegenüberliegenden Eckbereichen, bevorzugt in allen vier Eckbereichen, ein oben beschriebenes Befestigungselement aus Klemmstück und Schraubenbolzen mit Schraubenfeder aufweist. Der Grundkörper wird auf das Profil aufgesetzt, so dass jeweils zwei Klemmstücke in Linie in eine Nut in dem Profil einfahren.

Um die Montage noch weiter zu beschleunigen und zu erleichtern, ist in einem weiteren Ausführungsbeispiel daran gedacht, dass das Verbindungselement auf einer Seite zwei Befestigungselemente aus Klemmstück, Schraubenbolzen und Schraubenfeder aufweist, während die andere Seite von einer Schwenkleiste belegt ist. Diese Schwenkleiste bildet eine Scharnierrinne aus, welche auf eine Kante der Ausnehmung des Profils, d. h. der Nut, aufsetzbar ist. Die Kante greift in die Scharnierrinne ein, so dass zwischen der Kante und der Schwenkleiste quasi ein Scharnier gebildet wird. Hierdurch entfällt ein Anziehen von zwei Schraubenbolzen. Auf der gegenüberliegenden Seite der Schwenkleiste befinden sich zwei oben beschriebene Befestigungselemente.

Die Schwenkleiste selbst ist der Einfachheit halber ebenfalls durch Befestigungselemente, insbesondere durch Schraubenbolzen an dem Verbindungselement festlegbar, allerdings weist sie nach der Festlegung keine Beweglichkeit mehr auf, wie die oben beschriebenen Klemmstücke.

Damit auch die Schwenkleiste zentriert ist, kann in der Unterseite des Verbindungselementes eine Anschlagkante eingeformt sein, gegen die die Schwenkleiste sich abstützt.

Ein derartiges Verbindungselement wird bspw. benutzt, wenn eine Verbindung zwischen einer Öffnung zum Längskanal hin und einer Zapfstelle für das Fluid erzeugt werden soll. In diesem Fall weist das Verbindungselement selbst eine Bohrung auf, die einen Durchlass zu der Öffnung gewährleistet.

Das Verbindungselement ist aber auch vielfältig anderweitig verwendbar. Bspw. kann es der Festlegung eines Kanalverbinders dienen. Bei diesem Kanalverbinder handelt es sich i.d.R. um eine Hülse, die abgedichtet über einen O-Ring, in den Längskanal des Profils eingesetzt wird. Andererseits kann der Kanalverbinder ebenfalls abgedichtet über einen O-Ring in einen weiteren Längskanal eingesteckt sein oder aber auch eine Schraubverbindung aufweisen. Wichtig ist dabei, dass der Kanalverbinder in seiner eingesetzten Stellung gehalten wird und nicht bspw. unter einem in dem Längskanal aufgebauten Innendruck herausrutscht. Für die Halterung des Kanalverbinders weist das Verbindungselement einen Klammerstreifen auf, der das Profil übergreift und in eine Ringnut des Kanalverbinders eingreift.

Des weiteren gibt es Verbindungselemente, die lediglich zwei Profile miteinander verbinden sollen. Hier ist es möglich, an einer Platte Schwenkleisten gegenüberliegend jeweils ein Paar von Klemmstücken der Befestigungselemente vorzusehen, wobei die eine Schwenkleiste mit einem Paar von Befestigungselementen in die Nuten des einen Profils und die andere Schwenkleiste mit dem andere Paar von Klemmstücken in die Nuten des anderen Profils eingesetzt werden.

Das erfindungsgemässe Verbindungselement kann auch zur Herstellung von Knoten-, T-förmigen- und L-förmigen Verbindungen benutzt werden. In diesem Fall handelt es sich um eine abgebogene Platte, die allerdings höchstens an dem einen Schenkel eine Schwenkleiste aufweist, während an dem anderen Schenkel die Schwenkleiste durch ein Paar von Befestigungselementen mit Klemmstücken ersetzt ist.

Als Verbindungselement kommt beispielsweise auch ein Wandwinkel in Betracht, mittels welchem ein Profilstrang an einer Wand od. dgl. festgelegt werden kann. Ein entsprechender Tragschenkel an diesem Wandwinkel soll bevorzugt von einem oben beschriebenen Befestigungselement durchsetzt werden, welches das parallelogrammartige Klemmstück aufweist. Zum Festlegen des Profils wird dieses Klemmstück in eine entsprechend hinterschnittene Nut eingesetzt und durch Drehen des Schraubenbolzens festgelegt.

Damit einer vorgegebenen Lage oder eines vorgegebenen Verlaufs des Profils Rechnung getragen werden kann, sollen in dem Tragschenkel mehrere Ausnehmungen vorhanden sein, so dass das Befestigungselement an unterschiedlichen Stellen den Tragschenkel durchsetzt. Beispielsweise bietet sich hier ein diagonales oder auch seitenparalleles Langloch an. Ferner ist es möglich, eine Bohrung als Übergang zu einem Langloch vorzusehen, wobei die Bohrung einen Durchmesser aufweist, der grösser als der Durchmesser des Schraubenkopfes ist. Auf diese Weise kann ein Befestigungselement auch nachträglich, ohne es auseinanderzunehmen, in das Langloch eingesetzt werden.

Dies sind nur einige Beispiele, wie das Verbindungselement für einen baukastenartigen Aufbau des Leitungssystems verwendet werden kann. Je nach Anwendung sind viele andere Möglichkeiten denkbar.

In dem vorliegenden erfindungsgemässen Leitungssystem kann auch ein neuer Knotenpunkt Anwendung finden, für den jedoch separat Schutz begehrt wird. Dieser Knotenpunkt weist ein Gehäuse auf, das mehrere Anschlüsse besitzt, so dass je nach gewünschter Konfiguration die Profile mit dem Knotenpunkt verbunden werden können. Wird ein Anschluss eines Profiles gewünscht, so genügt es, in die entsprechende Anschlussbohrung einen oben beschriebenen Kanalverbinder einzuschrauben, auf diesen das Profil aufzuschieben und das entsprechende Verbindungselement anzubringen.

Diejenigen Anschlüsse, die nicht benötigt werden, sollen durch entsprechende Blindstopfen verschlossen werden. Ein derartiger Knotenpunkt ist ausserordentlich vielfältig anwendbar und einsetzbar.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Ansicht eines Profils zum Bilden eines erfindungsgemässen Leitungssystems;
Figur 2 eine Draufsicht auf ein erfindungsgemässes Verbindungselement;
Figur 3 eine Draufsicht auf das Verbindungselement gemäss Figur 2 um 90° gekippt;
Figur 4 eine Draufsicht auf die Unterseite des Verbindungselementes gemäss Figur 2;
Figur 5 eine Draufsicht auf das Verbindungsgelement gemäss Figur 4 nochmals um 90° gekippt;
Figur 6 eine Draufsicht auf das Verbindungselement gemäss Figur 5 um 90° seitlich gekippt;
Figur 7 eine Stirnansicht auf ein Profil eines erfindungsgemässen Leitungssystems beim Einsetzen des Verbindungselementes gemäss den Figuren 1 bis 5;
Figur 8 und 9 Stirnansicht der Anordnung gemäss Figur 7 in weiteren Gebrauchslagen;

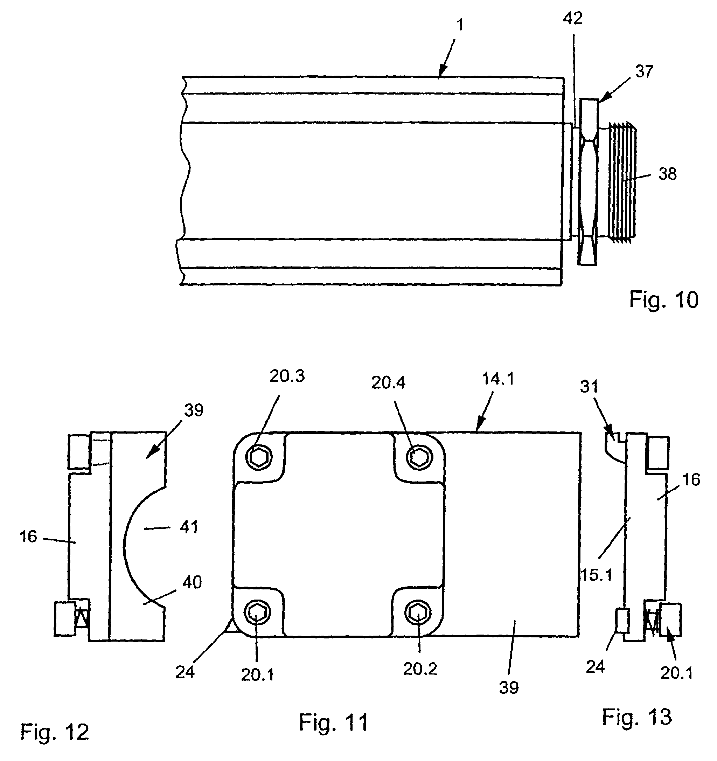

Figur 10 eine Draufsicht auf ein Profil eines erfindungsgemässen Leitungssystems mit einem eingesetzen Kanalverbinder;
Figur 11 eine Draufsicht auf ein Verbindungselement zum Verbinden des Profil gemäss Figur 10 mit dem Kanalverbinder;
Figuren 12 und 13 Stirnansichten des Verbindungselementes gemäss Figur 11 jeweils um 90° gekippt;

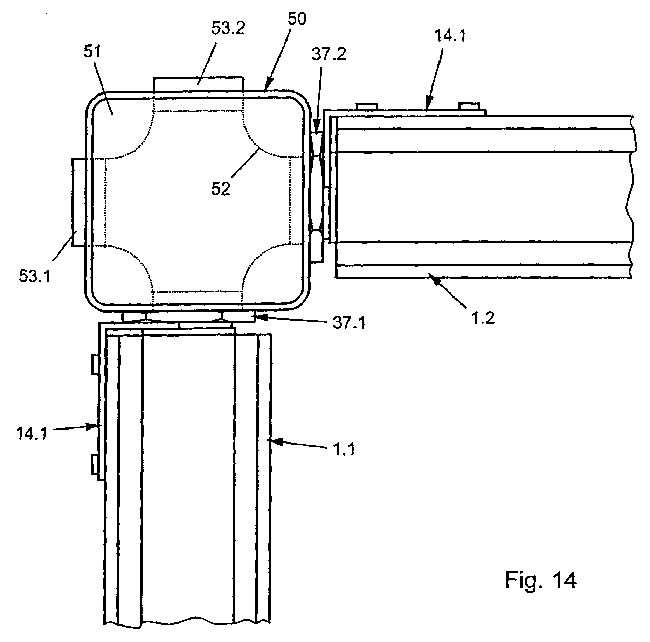

Figur 14 eine Draufsicht auf einen erfindungsgemässen Knotenpunkt zum Verbinden von zwei Profilen;
Figur 15 eine Draufsicht auf zwei aneinanderstossende Profile;
Figur 16 eine Draufsicht auf ein Verbindungselement zum Verbinden der beiden Profile gemäss Figur 14;
Figur 17 eine Draufsicht auf die Unterseite des Verbindungselementes gemäss Figur 15;
Figur 18 eine Draufsicht auf zwei, eine T-förmige Verbindung herstellende Profile eines erfindungsgemässen Leitungssystems mit zwei diese Verbindung sichernde Verbindungselemente ausserhalb der Gebrauchslage;
Figur 19 eine Seitenansicht eines erfindungsgemässen Wandwinkels zum Festlegen von einem Profil;
Figur 20 eine Draufsicht auf den Wandwinkel gemäss Figur 19;
Figur 21 eine Draufsicht auf ein weiteres Ausführungsbeispiel eines Wandwinkels.

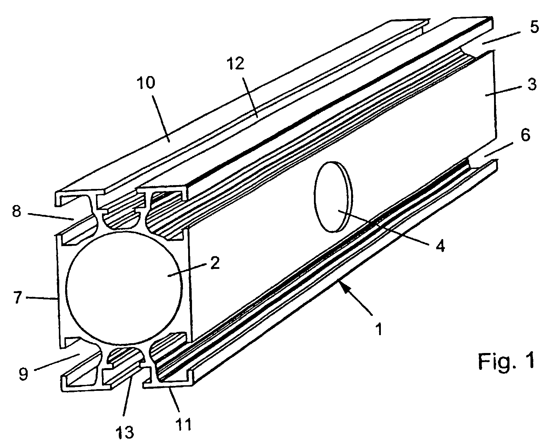

Ein erfindungsgemässes Leitungssystem zum Zuführen, Leiten und Verteilen von Fluiden, insbesondere von Luft, soll aus einzelnen, möglichst gleich ausgebildeten Profilen baukastenartig zusammengesetzt werden. Das in Figur 1 gezeigten Ausführungsbeispiel eines Profils 1 weist einen Längskanal 2 auf, in dem das Fluid geführt wird. In einer Aussenwand 3 des Profils 1 befindet sich eine Öffnung 4, durch die mittels eines entsprechenden Verbindungselementes 14 Fluid entnommen werden kann.

Desweiteren ist erkennbar, dass in die Aussenwand 3, zwei, parallel zueinander verlaufende hinterschnittene Nuten 5 und 6 eingeformt sind, welche der Festlegung eines in den nachfolgenden Figuren beschriebenen Verbindungselementes 14 dienen.

Bei diesem Ausführungsbeispiel eines Profils 1 ist erkennbar, dass auch eine der Aussenwand 3 gegenüberliegende Aussenwand 7 mit jeweils zwei weiteren hinterschnittenen Nuten 8 und 9 versehen ist, während eine Oberseite 10 und eine Unterseite 11 nur jeweils eine Nut 12 und 13 aufweisen. Selbstverständlich können auch Oberseite 10 und Unterseite 11 mit jeweils zwei parallel zueinander verlaufenden hinterschnittenen Nuten versehen werden, so dass sämtliche Seiten des Profils identisch ausgebildet sind. Hierdurch werden Verwechselungen beim Zusammenbau vermieden.

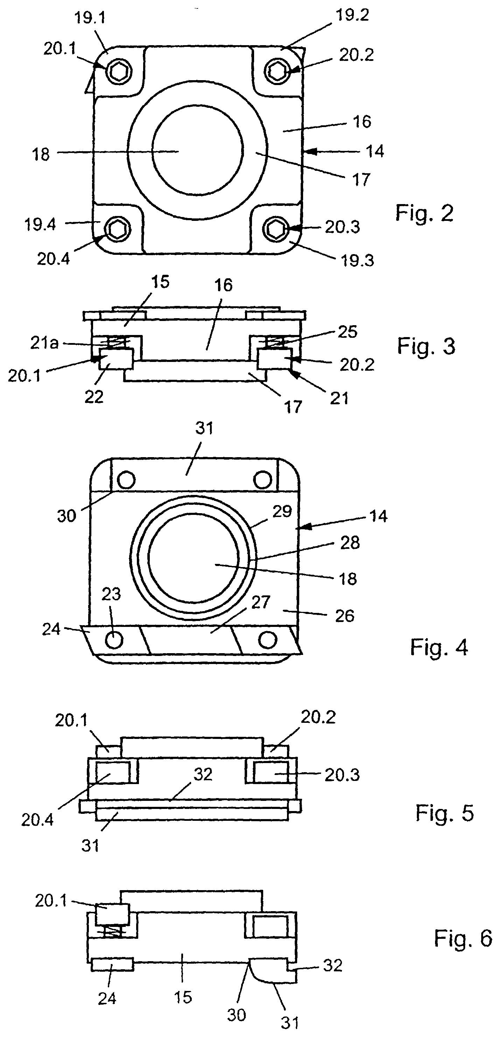

Ein erfindungsgemässes Verbindungselement 14, welches eine Verbindung des Profils 1 mit einer nicht näher gezeigten Entnahmestelle oder selbst die Entnahmestelle bilden soll, weist gemäss Figur 3 eine etwa rechteckförmige Grundplatte 15 auf, auf welcher durch eine Erhebung 16 vier Eckbereiche 19.1 bis 19.4 ausgebildet sind. Auf der Erhebung 16 sitzt ein Zylinderabschnitt 17 auf, der eine Überleitung zu einem Verbindungselement einer Entnahmeeinrichtung für das Fluid darstellt. Zylinderabschnitt 17, Erhebung 16 und Grundplatte 15 werden von einer Bohrung 18 (Figur 2) durchsetzt, welche in Gebrauchslage auf die Öffnung 4 in dem Profil 1 ausgerichtet ist.

In den Eckbereichen 19.1 bis 19.4 sind vier Befestigungselemente 20.1 bis 20.4 erkennbar. Die Befestigungselemente 20.1 und 20.2 weisen gemäss Figur 3 jeweils einen Schraubenbolzen 21 aus einem Gewindeschaft 21a und einen Schraubenkopf 22 auf, welcher die Grundplatte 15 durchsetzt und danach in eine in Figur 4 gezeigte Gewindebohrung 23 eines Klemmstückes 24 eingreift. Dieses Klemmstück 24 ist bevorzugt parallelogrammartig ausgestaltet.

Gegenüber der Grundplatte 15 stützt sich im übrigen der Schraubenkopf 22 des Schraubenbolzen 21 über eine Schraubenfeder 25 ab.

In eine Unterseite 26 des Verbindungselementes 14 ist eine Rinne 27 eingeformt, welche der zumindest teilweisen Aufnahme und Zentrierung der Klemmstücke 24 dient.

Zum Abdichten des Bereiches zur Bohrung 18 hin um die Öffnung 4 herum in Gebrauchslage nach der Festlegung des Verbindungselementes 14 an dem Profil 1 ist ein O-Ring 28 vorgesehen, der in eine Ringnut 29 in der Unterseite 26 des Verbindungselementes 14 eingesetzt ist und die Bohrung 18 umgibt.

Des weiteren ist in die Unterseite 26 des Verbindungselementes 14 eine Anschlagkante 30 eingearbeitet, gegen die eine in den Figuren 5 und 6 näher dargestellte Schwenkleiste 31 anschlägt. Die Schwenkleiste 31 wird von den beiden Befestigungselementen 20.3 und 20.4 gehalten, welche ebenfalls die Grundplatte 15 durchsetzen und in entsprechende nicht näher gekennzeichnete Gewindebohrungen in der Schwenkleiste 31 eingreifen.

Die Schwenkleiste 31 bildet zusammen mit der Grundplatte 15 eine Scharniernut 32.

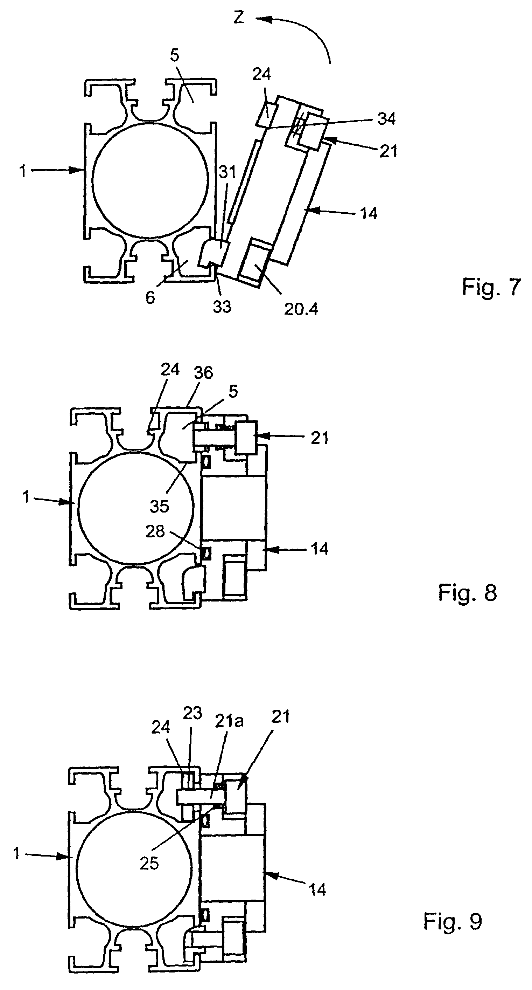

Die Verbindung des Verbindungselementes 14 mit dem Profil 1 geschieht gemäss den Figuren 7 bis 9 folgendermassen:

Das Verbindungselement 14 wird mit der Schwenkleiste 31 auf eine Kante 33 der Ausnehmung 6 aufgesetzt und in Richtung zu dem Profil 1 hin geschwenkt. Sobald das Verbindungselement 14 an dem Profil 1 anliegt, greift auch das Klemmstück 24 in die Nut 5 ein, wobei das Klemmstück 24 über eine innere Kante 34 zentriert ist. Diese innere Kante 34 verläuft parallel zum Schlitz der Nut 5.

Nunmehr wird gemäss Figur 9 Druck auf den Schraubenbolzen 21 ausgeübt, so dass dieser zusammen mit dem Klemmstück 24 gegen den Druck der Schraubenfeder 25 in die Nut 5 eindringt. Wird jetzt der Schraubenbolzen 21 gedreht, schwenkt zuerst das Klemmstück 24 mit, bis es seitlich an den Nutwänden 35 bzw. 36 anschlägt, wobei das Klemmstück 24 bevorzugt so gelagert ist, dass zwei Seiten des Parallelogramms den Nutwänden 35 und 36 anliegen. Damit das Klemmstück 24 mit den Schraubenbolzen 21 mitdreht, sollte die Gewindebohrung 23 gegenüber dem Gewindeschaft 21a eine beliebige fertigungstechnische Hemmung aufweisen oder beispielsweise einen Belag, einen Klebstoff od. dgl. um die Mitnahme von dem Klemmstück 24 bis zur Anlage an die Nutwände 35, 36 zu gewährleisten.

Wird jetzt der Schraubenbolzen 21 weitergedreht, so dreht sich der Gewindeschaft 21a weiter in die Gewindebohrung 23 in dem Klemmstück, so dass das Klemmstück 24 angezogen wird und von innen her gegen die Nuthinterschneidungen gepresst wird. Hierdurch erfolgt ein Festlegen des Befestigungselemente 14.

Zum Lösen des Befestigungselementes 14 werden die Schraubenbolzen 21 gedreht, so dass das Klemmstück 24 aus seiner Klemmstellung befreit wird. Sobald das Klemmstück 24 frei ist, dreht es infolge der o.g. Hemmung zusammen mit dem Schraubenbolzen 21 und gelangt in eine Lage, in der es wieder unter Federspannung in die Nutöffnung gemäss Figur 8 zurückgleiten kann. Damit wird das Klemmstück und mit ihm das Verbindungselement 14 frei.

In manchen Fällen ist es wünschenswert, ein Profil 1 mit bspw. einem Kanalverbinder 37 zu verbinden, der einerseits abgedichtet über einen nicht näher gezeigten O-Ring in dem Längskanal 2 in dem Profil 1 steckt und andererseits auf ein anderes Profil, Knotenelement od. dgl. mittels einem Aussengewinde 38 aufgeschraubt ist. Zum Verbinden des Profils 1 mit dem Kanalverbinder 37 ist hier ein Verbindungselement 14.1 vorgesehen, welches zum einen die Klemmstücke 24 und zum anderen die Schwenkleiste 31 aufweist. In diesem Fall weist das Verbindungselement 14.1 lediglich die Grundplatte 15 und die Erhebung 16 auf, wobei letztere ebenfalls vernachlässigbar ist.

Die Grundplatte 15.1 ist dagegen über einen Klammerstreifen 39 verlängert, der, querschnittlich gesehen, ein Winkelprofil ausbildet, wobei in seinen stirnwärtigen Schenkeln 40 eine Mulde 41 eingeformt ist. Diese Mulde 41 kann in Gebrauchslage in eine Ringnut 42 eingreifen, welche wiederum dem Kanalverbinder 37 eingeformt ist.

Das Verbindungselement 14.1 ist vor allem auch für die Verbindung von Profilen 1.1 bzw. 1.2 mit einem Knotenpunkt 50 geeignet. Die Verbindung wird über ein Verbindungselement 14.1 und jeweils einen Kanalverbinder 37.1 bzw. 37.2 hergestellt.

Der Knotenpunkt 50 weist im vorliegenden Ausführungsbeispiel ein etwa rechteckiges Gehäuse 51 auf, in dessen Innerem sich ein gestrichelt dargestelltes Kanalkreuz 52 befindet. Dieses Kanalkreuz 52 gestattet den Anschluss von vier Profilen. Im Rahmen der Erfindung liegen natürlich auch Knotenpunkte mit weniger oder mehr Anschlüssen. Im vorliegenden Ausführungsbeispiel sind nur zwei Anschlüsse mit Kanalverbinder 37.1 und 37.2 belegt, die beiden anderen Anschlüsse sind jeweils durch einen Stopfen 53.1 bzs. 53.2 verschlossen. Sollten diese Anschlüsse benutzt werden, kann der jeweilige Stopfen 53.1 bzw. 53.2 entfernt und ein Kanalverbinder 37 eingeschraubt werden. Ein derartiger Knotenpunkt 50 ist ausserordentlich variabel.

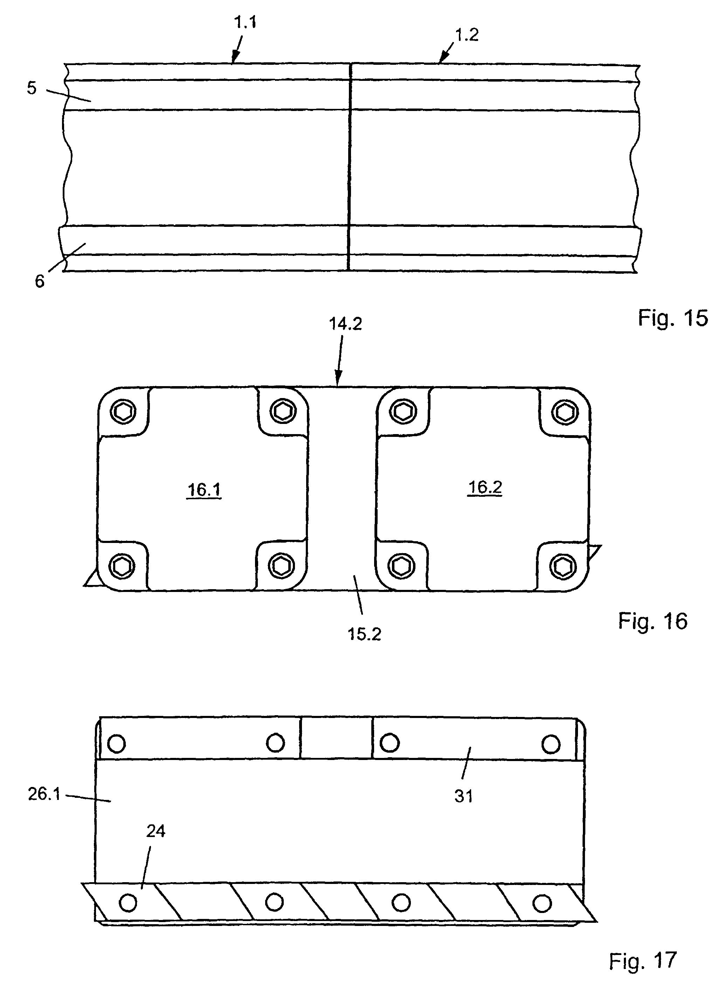

Gemäss den Figuren 15 bis 17 besteht auch die Möglichkeit, zwei Profile 1.1 und 1.2 stumpf miteinander zu verbinden. Hierzu weist ein Verbindungselement 14.2 eine Grundplatte 15.2 auf, welche noch fakultativ mit zwei Erhebungen 16.1 und 16.2 belegt ist.

Auf der Unterseite 26.1 der Grundplatte 15.2 sind zwei Paare von Klemmstücken 24 und zwei Schwenkleisten 31 erkennbar. Jeweils eine Schwenkleiste 31 wird in die Nuten 5 der Profile 1.1 und 1.2 eingesetzt, während jeweils ein Paar von Klemmstücken 24 in die Nuten 6 der Profile 1.1 und 1.2 eingreifen.

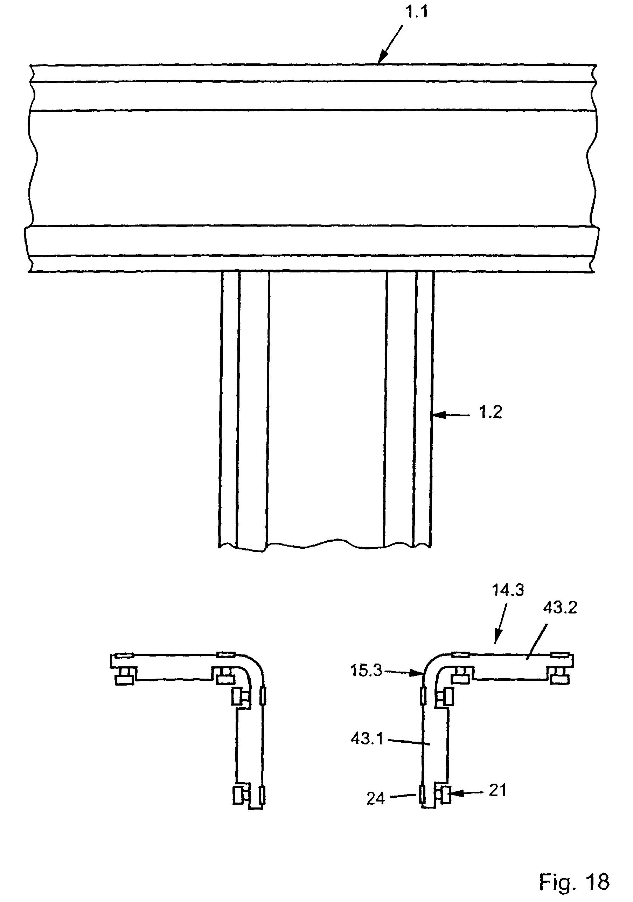

Durch das erfindungsgemässe System können auch Knotenpunkte, T- und L-Verbindungen zwischen den Profilen hergestellt werden, wie dies in Figur 18 gezeigt ist. In diesem Fall wird ein Verbindungselement 14.3 im wesentlichen aus einer Grundplatte 15.3 gebildet, die aus zwei abgebogenen Schenkeln 43.1 und 43.2 besteht. Jeder abgebogene Schenkel 43.1 und 43.2 weist jeweils zwei Paare von sich gegenüberliegenden Klemmstücken 24 auf, so dass in diesem Ausführungsbeispiel die Schwenkleisten 31 entfallen oder nur eine Schwenkleiste vorhanden ist.

Zum Zusammenbau werden diese Verbindungselemente 14.2 in die Eckbereiche der Profile 1.1 und 1.2 eingesetzt und die Klemmstücke 24 nacheinander in die jeweilige hinterschnittene Nut durch Druck auf den Schraubenbolzen 21 eingesetzt, gedreht und angezogen.

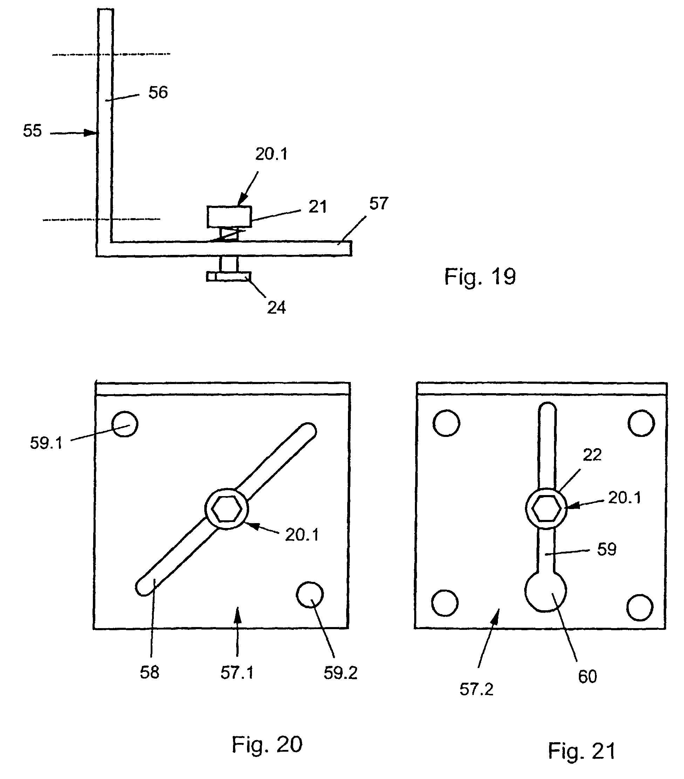

Dem Festlegen des erfindungsgemässen Profils 1 beispielsweise an einer nicht näher gezeigten Wand dient ein in Figur 19 dargestellter Wandwinkel 55. Dieser Wandwinkel 55 weist einen Befestigungsschenkel 56 und einen Tragschenkel 57 auf. In dem Tragschenkel 57 befinden sich bevorzgut verschiedene Ausnehmungen, in die zumindest ein Befestigungselement 20.1 mit Klemmstück 24 eingesetzt werden kann. In Gebrauchslage greift dieses Klemmstück 24 beispielsweise in die Nut 12 oder 13 des Profiles 1 ein, wobei durch Drehen des Schraubenbolzens 21 und damit des Klemmstückes 24 eine Festlegung des Profils 1 erfolgt.

Gemäss Figur 20 ist in den Tragschenkel 57.1 ein diagonales Langloch 58 eingeformt, während sich in zwei Eckbereichen noch einfache Bohrungn 59.1 und 59.2 befinden.

Bei dem Ausführungsbeispiel einer Tragplatte 57.2 gemäss Figur 21 ist ein seitenparalleles Langloch 59 vorgesehen, welches mit einer Aufnahmebohrung 60 in Verbindung steht, durch die der Schraubenkopf 22 passt.

### Positionszahlenliste

| | | | | | |
|---|---|---|---|---|---|
| 1 | Profil | 34 | innere Kante | 67 | |
| 2 | Längskanal | 35 | Nutwand | 68 | |
| 3 | Aussenwand | 36 | Nutwand | 69 | |
| 4 | Öffnung | 37 | Kanalverbinder | 70 | |
| 5 | hinterschn. Nut | 38 | Aussengewinde | 71 | |
| 6 | hinterschn. Nut | 39 | Klammerstreifen | 72 | |
| 7 | Aussenwand | 40 | Schenkel | 73 | |
| 8 | hinterschn. Nut | 41 | Mulde | 74 | |
| 9 | hinterschn. Nut | 42 | Ringnut | 75 | |
| 10 | Oberseite | 43 | Schenkel | 76 | |
| 11 | Unterseite | 44 | | 77 | |
| 12 | Nut | 45 | | 78 | |
| 13 | Nut | 46 | | 79 | |
| 14 | Verbindungselement | 47 | | | |
| 15 | Grundplatte | 48 | | | |
| 16 | Erhebung | 49 | | | |
| 17 | Zylinderabschnitt | 50 | Knotenpunkt | | |
| 18 | Bohrung | 51 | Gehäuse | | |
| 19 | Eckbereich | 52 | Kanalkreuz | | |
| 20 | Befestigungselement | 53 | Stopfen | | |
| 21 | Schraubenbolzen | 54 | | | |
| 21a | Gewindeschaft | | | | |
| 22 | Schraubenkopf | 55 | Wandwinkel | | |
| 23 | Gewindebohrung | 56 | Befestigungsschenkel | | |
| 24 | Klemmstück | 57 | Tragschenkel | | |
| 25 | Schraubenfeder | 58 | diagonales Langloch | | |
| 26 | Unterseite | 59 | Langloch | | |
| 27 | Rinne | 60 | Aufnahmebohrung | | |
| 28 | O-Ring | 61 | | | |
| 29 | Ringnut | 62 | | | |
| 30 | Anschlagkante | 63 | | | |
| 31 | Schwenkseite | 64 | | Z | Schwenkrichtung |
| 32 | Scharniernut | 65 | | | |
| 33 | Kante | 66 | | | |

## Patentansprüche

1. Leitungssystem zum Zuführen, Leiten und Verteilen von Fluiden, insbesondere Luft, mit Profilen (1, 1.1, 1.2) die einen Längskanal (2) für das Fluid und in zumindest einer Aussenwand (3, 7) zumindest eine hinterschnittene Ausnehmung (5, 6, 8,9) zur Aufnahme eines Befestigungselementes (20.1, 20.2) für ein Verbindungselement (14, 14.1, 14.2, 14.3, 55) aufweisen, wobei das Befestigungselement (20.1, 20.2) das Verbindungselement (14, 14.1, 14.2, 14.3, 55) durchsetzt und ein Klemmstück (24) aufweist, welches in die Ausnehmung (5, 6, 8, 9, 12, 13) einsetzbar und durch Drehen in der Ausnehmung festlegbar ist,
**dadurch gekennzeichnet,**
**dass** das Befestigungselement (20.1, 20.2) einen Schraubenbolzen (21) aufweist, der eine Bohrung in dem Verbindungselement (14, 14.1, 14.2, 14.3, 55) durchsetzt und einen Gewindeschaft (21a) zum Einsetzen in eine Gewindebohrung (23) in dem Klemmstück (24) aufweist.

2. Leitungssystem nach Anspruch 1, **dadurch gekennzeichnet, dass** zwischen dem Schraubenbolzen (21) und dem Verbindungselement (14, 14.1, 14.2, 14.3, 55) eine Schraubenfeder (25) angeordnet ist.

3. Leitungssystem nach Anspruch 1 oder 2, **dadurch gekennzeichnet, dass** das Klemmstück (24) ein parallelogrammartig geformtes Plättchen ist.

4. Leitungssystem nach einem der Ansprüche 1 bis 3, **dadurch gekennzeichnet, dass** das Klemmstück (24) ausserhalb der Gebrauchslage zumindest teilweise in einer Rinne (27) aufgenommen ist oder an einer Kante (34) anschlägt, welche in eine Unterseite (26, 26.1) des Verbindungselementes eingeformt ist.

5. Leitungssystem nach wenigstens einem der Ansprüche 1 bis 4, **dadurch gekennzeichnet, dass** das Verbindungselement vier Eckbereiche (19.1, 19.2) aufweist und in jedem Eckbereich ein Befestigungselement (20.1, 20.2) vorgesehen ist.

6. Leitungssystem nach wenigstens einem der Ansprüche 1 bis 5, **dadurch gekennzeichnet, dass** das Verbindungselement (14, 14.1) auf einer Seite zumindest zwei Befestigungselemente (20.1, 20.2) aufweist, während die andere Seite von einer Schwenkleiste (31) belegt ist.

7. Leitungssystem nach Anspruch 6, **dadurch gekennzeichnet, dass** die Schwenkleiste (31) eine Scharnierrinne (32) ausbildet, in welche eine Kante (33) der Ausnehmung (5) des Profils (1) einsetzbar ist.

8. Leitungssystem nach Anspruch 6 oder 7, **dadurch gekennzeichnet, dass** die Schwenkleiste (31) mittels Befestigungselementen (20.3, 20.4) an dem Verbindungselement (14, 14.1, 14.2) festlegbar ist.

9. Leitungssystem nach einem der Ansprüche 6 bis 8, **dadurch gekennzeichnet, dass** in das Verbindungselement (14, 14.1, 14.2) eine Anschlagkante (30) für die Schwenkleiste (31) eingeformt ist.

10. Leitungssystem nach wenigstens einem der Ansprüche 1 bis 9, **dadurch gekennzeichnet, dass** von dem Verbindungselement (14.1) ein Klammerstreifen (39) zum Festlegen eines Kanalverbinders (37) abragt.

11. Leitungssystem nach Anspruch 10, **dadurch gekennzeichnet, dass** der Kanalverbinder (37) eine Ringnut (42) aufweist, in welche der Klammerstreifen (39) teilweise eingreift.

12. Leitungssystem nach wenigstens einem der Ansprüche 1 bis 11, **dadurch gekennzeichnet, dass** zum Verbinden von zwei Profilen (1.1, 1.2) eine Platte (15.2) mit einer Mehrzahl von Klemmstücken (24) bzw. von Schwenkleisten (31) vorgesehen ist.

13. Leitungssystem nach Anspruch 12, **dadurch gekennzeichnet, dass** eine Platte (15.3) zum Herstellen von Knotenpunkten, T- oder L-Verbindungen der Profile (1.1, 1.2) auch rechtwinkelig oder in einem sonstigen gewünschten Winkel entsprechend der herzustellenden Verbindung abgebogen und mit den entsprechenden Befestigungselementen versehen ist.

14. Leitungssystem nach wenigstens einem der Ansprüche 1 bis 13, **dadurch gekennzeichnet, dass** das Verbindungselement ein Wandwinkel (55) ist, der einen Tragschenkel (57) mit zumindest einer Ausnehmung (58, 59, 59.1, 59.2, 60) zur Aufnahme eines Befestigungselementes (20.1) aufweist.

## Claims

1. Conduit system for supplying, conducting and distributing fluids, more especially air, said system having profiles (1, 1.1, 1.2) which have a longitudinal duct (2) for the fluid and at least one undercut recess (5, 6, 8, 9) in at least one outer wall (3, 7) for accommodating a securing element (20.1, 20.2) for a connecting element (14, 14.1, 14.2, 14.3, 55) the securing element (20.1, 20.2) traversing the connecting element (14, 14.1, 14.2, 14.3, 55) and having a clamping piece (24) which is insertable into the recess (5, 6, 8, 9, 12, 13) and securable in the recess by rotation, **characterised in that** the securing element (20.1, 20.2) has a screw bolt (21), which traverses a bore in the connecting element (14, 14.1, 14.2, 14.3, 55) and has a threaded shaft (21a) for insertion into a threaded bore (23) in the clamping piece (24).

2. Conduit system according to claim 1, **characterised in that** a helical spring (25) is disposed between the screw bolt (21) and the connecting element (14, 14.1, 14.2, 14.3, 55).

3. Conduit system according to claim 1 or 2, **characterised in that** the clamping piece (24) is a small plate with a parallelogram-like configuration.

4. Conduit system according to one of claims 1 to 3, **characterised in that** the clamping piece (24) is accommodated externally of the position of use at least partially in a groove (27) or abuts against an edge (34) which is incorporated in an underside (26, 26.1) of the connecting element.

5. Conduit system according to at least one of claims 1 to 4, **characterised in that** the connecting element has four comer regions (19.1, 19.2), and a securing element (20.1, 20.2) is provided in each comer region.

6. Conduit system according to at least one of claims 1 to 5, **characterised in that** the connecting element (14, 14.1) has at least two securing elements (20.1, 20.2) on one side, while the other side is occupied by a pivotal bar (31).

7. Conduit system according to claim 6, **characterised in that** the pivotal bar (31) forms a hinge groove (32), into which one edge (33) of the recess (5) of the profile (1) is insertable.

8. Conduit system according to claim 6 or 7, **characterised in that** the pivotal bar (31) is securable on the connecting element (14, 14.1, 14.2) by means of securing elements (20.3, 20.4).

9. Conduit system according to one of claims 6 to 8, **characterised in that** an abutment edge (30) for the pivotal bar (31) is incorporated in the connecting element (14, 14.1, 14.2).

10. Conduit system according to at least one of claims 1 to 9, **characterised in that** a bracket strip (39) for securing a duct connector (37) protrudes from the connecting element (14.1).

11. Conduit system according to claim 10, **characterised in that** the duct connector (37) has an annular groove (42) in which the bracket strip (39) partially engages.

12. Conduit system according to at least one of claims 1 to 11, **characterised in that** a plate (15.2), having a plurality of clamping pieces (24) or respectively pivotal bars (31), is provided for the connection of two profiles (1.1, 1.2).

13. Conduit system according to claim 12, **characterised in that** a plate (15.3) for producing intersections, T-shaped connections or L-shaped connections of the profiles (1.1, 1.2) is also deflected at right angles or at another desired angle corresponding to the connection to be produced, and it is provided with the corresponding securing elements.

14. Conduit system according to at least one of claims 1 to 13, **characterised in that** the connecting element is a wall bracket (55), which has a supporting portion (57) with at least one recess (58, 59, 59.1, 59.2, 60) for the accommodation of a securing element (20.1).

## Revendications

1. Système de canalisation pour l'amenée, la conduite et la distribution de fluides, en particulier d'air, avec des profilés (1, 1.1, 1.2) présentant un canal longitudinal (2) pour le fluide et, dans au moins une paroi extérieure (3, 7), au moins un évidemment à contre-dépouille (5, 6, 8, 9) destiné à recevoir un élément de fixation (20.1, 20.2) d'un élément de connexion (14, 14.1, 14.2, 14.3, 55), l'élément de fixation (20.1, 20.2) traversant l'élément de connexion (14, 14.1, 14.2, 14.3, 55) et une pièce de serrage (24) pouvant être placée dans l'évidemment (5, 6, 8, 9, 12, 13) et pouvant être fixée dans l'évidemment par rotation,
**caractérisé par le fait que**
l'élément de fixation (20.1, 20.2) présente un boulon fileté (21) qui traverse un alésage dans l'élément de connexion (14, 14.1, 14.2, 14.3, 55) et une tige filetée (21a) destinée à être introduite dans un alésage taraudé (23) dans la pièce de serrage (24).

2. Système de canalisation selon la revendication 1, **caractérisé par le fait qu'**entre le boulon fileté (21) et l'élément de connexion (14, 14.1, 14.2, 14.3, 55) est disposé un ressort hélicoïdal (25).

3. Système de canalisation selon la revendication 1 ou 2, **caractérisé par le fait que** la pièce de serrage (24) est une plaquette en forme de parallélogramme

4. Système de canalisation selon l'une des revendications 1 à 3, **caractérisé par le fait que** la pièce de serrage (24) est reçue, en-dehors de la position d'utilisation, au moins partiellement dans une gorge (27) ou vient en butée contre une arête (34) formée dans une face inférieure (26, 26.1) de l'élément de connexion.

5. Système de canalisation selon au moins l'une des revendications 1 à 4, **caractérisé par le fait que** l'élément de connexion présente quatre zones de coin (19.1, 19.2) et que dans chaque zone de coin est prévu un élément de fixation (20.1, 20.2).

6. Système de canalisation selon au moins l'une des revendications 1 à 5, **caractérisé par le fait que** l'élément de connexion (14, 14.1) présente, sur une face, au moins deux éléments de fixation (20.1, 20.2), tandis que sur l'autre face est placée une tringle de pivotement (31).

7. Système de canalisation selon la revendication 6, **caractérisé par le fait que** la tringle de pivotement (31) constitue une gorge de charnière (32) dans laquelle peut être placée une arête (33) de l'évidemment (5) du profilé (1).

8. Système de canalisation selon la revendication 6 ou 7, **caractérisé par le fait que** la tringle de pivotement (31) peut être fixée à l'élément de connexion (14, 14.1, 14.2) au moyen d'éléments de fixation (20.3, 20.4).

9. Système de canalisation selon l'une des revendications 6 à 8, **caractérisé par le fait que** dans l'élément de connexion (14, 14.1, 14.2) est formée une arête de butée (30) pour la tringle de pivotement (31).

10. Système de canalisation selon au moins l'une des revendications 1 à 9, **caractérisé par le fait que** de l'élément de connexion (14.1) s'élève un collier de serrage (39) destiné à fixer un connecteur de canaux (37).

11. Système de canalisation selon la revendication 10, **caractérisé par le fait que** le connecteur de canaux (37) présente une rainure annulaire (42) dans laquelle s'engage partiellement le collier de serrage (39).

12. Système de canalisation selon au moins l'une des revendications 1 à 11, **caractérisé par le fait que** pour l'assemblage de deux profilés (1.1, 1.2) est prévue une plaque (15.2) avec une pluralité de pièces de serrage (24) ou de tringles de pivotement (31).

13. Système de canalisation selon la revendication 12, **caractérisé par le fait qu'**une plaque (15.3) destinée à réaliser des points de croisement, des connexions en T ou en L des profilés (1.1, 1.2) est également recourbée à angle droit ou selon un autre angle souhaité en fonction de la connexion à réaliser et est pourvue des éléments de fixation appropriés.

14. Système de canalisation selon au moins l'une des revendications 1 à 13, **caractérisé par le fait que** l'élément de connexion est une équerre de paroi (44) présentant une branche de support (57) avec au moins un évidemment (58, 59, 59.1, 59.2, 60) destiné à recevoir un élément de fixation (20.1).
